# EUROPEAN PATENT SPECIFICATION

(11) **EP 1 526 943 B1**
(45) Date of publication and mention of the grant of the patent: **23.05.2007**
(21) Application number: 03771077.9
(22) Date of filing: 21.07.2003
(51) Int. Cl.: B23K 35/02, B23K 35/28, C25D 5/12, C25D 3/56

(54) **BRAZING PRODUCT AND METHOD OF MANUFACTURING A BRAZING PRODUCT WITH USE OF A PLATING BATH**
HARLÖTWERKSTOFF UND DESSEN HERTSTELLUNGSVERFAHREN UNTER VERWENDUNG EINES PLATTIERBADES
PRODUIT DE BRASAGE ET SON PROCEDE DE FABRICATION AVEC UTILISATION D'UN BAIN DE REVÊTEMENT

(30) Priority: 24.07.2002 EP 02078054
(43) Date of publication of application: 04.05.2005
(73) Proprietor: Corus Aluminium Walzprodukte GmbH, 56070 Koblenz (DE)
(72) Inventor: WITTEBROOD, Adianus Jacobus, NL-1991 HB Velserbroek (NL); WIJENBERG, Jacques, Hubert, Olga, Joseph, NL-1019 PE Amsterdam (NL); MOOIJ, Joop, Nicolaas, NL-1902 JP Castricum (NL)
(74) Representative: van der Donk, Henricus Matheus
(86) International application number: PCT/EP2003/008072
(87) International publication number: WO 2004/011188

(56) References cited:
- WO-A-00/71784
- WO-A-01/68312
- WO-A-02/38326
- WERNICK AND PINNER: "The Surface Treatment and Finishing of Aluminium and its Alloys, fifth edition, Volume 2" 1988 , SURFACE TREATMENT AND FINISHING OF ALUMINIUM AND ITS ALLOYS, TEDDINGTON, FINISHING PUBLICATIONS, GB, VOL. VOL. 2, PAGE(S) 1023-1071 XP002119817 page 1055 -page 1059

## Description

The invention relates to a sheet brazing product and to a method of manufacturing an Al or Al alloy workpiece, such as a brazing sheet product, comprising the steps of providing an Al or Al alloy workpiece, pre-treating the outersurface of the Al or Al alloy workpiece, and plating a metal layer comprising nickel onto the outersurface of the pre-treated workpiece. The invention also relates to a brazed assembly comprising at least one component made of this brazing product manufactured according to this invention.

Aluminium and aluminium alloys can be joined by a wide variety of brazing and soldering processes. Brazing, by definition, employs a filler metal or alloy having a liquidus above 450°C and below the solidus of the base metal. Brazing is distinguished from soldering by the melting point of the filler metal: a solder melts below 450°C. Soldering processes are not within the field of the present invention.

Brazing products, and in particular brazing sheet products, find wide applications in heat exchangers and other similar equipment. Conventional brazing sheet products have a core or base sheet, typically an aluminium alloy of the Aluminum Association ("AA")3xxx-series, having on at least one surface of the core sheet an aluminium clad layer (also known as an aluminium cladding layer), the aluminium clad layer being made of an AA4xxx-series alloy comprising silicon in an amount in the range of 4 to 14% by weight, and preferably in the range of 7 to 14% by weight. The aluminium clad layer may be coupled to the core or base alloy in various ways known in the art, for example by means of roll bonding, cladding, explosive cladding, thermal spray-forming or semi-continuous or continuous casting processes.

Controlled Atmosphere Brazing ("CAB") and Vacuum Brazing ("VB") are the two main processes used for industrial scale aluminium brazing. Industrial vacuum brazing has been used since the 1950's, while CAB became popular in the early 1980's after the introduction of the NOCOLOK (trade mark) brazing flux. Vacuum brazing is an essentially discontinuous process and puts high demands on material cleanliness. The disruption of the aluminium oxide layer present is mainly caused by the evaporation of magnesium from the clad alloy. There is always more magnesium present in the furnace than necessary. The excess magnesium condenses on the cold spots in the furnace and has to be removed frequently. The capital investment for suitable equipment is relatively high.

CAB requires an additional process step prior to brazing as compared to VB, since a brazing flux has to be applied prior to brazing. A brazing flux for use in brazing aluminium alloys usually consist of mixtures of alkali earth chlorides and fluorides, sometimes containing aluminium fluoride or cryolite. CAB is essentially a continuous process in which, if the proper brazing flux is being used, high volumes of brazed assemblies can be manufactured. The brazing flux dissolves the oxide layer at brazing temperature allowing the clad alloy to flow properly. When the NOCOLOK flux is used the surface needs to be cleaned thoroughly prior to flux application. To obtain good brazing results the brazing flux has to be applied on the total surface of the brazed assembly. This can cause difficulties with certain types of assemblies because of their design. For example, because evaporator type heat exchangers have a large internal surface, problems can arise because of poor access to the interior. For good brazing results the flux has to adhere to the aluminium surface before brazing. Unfortunately the brazing flux after drying can easily fall off due to small mechanical vibrations. During the brazing cycle, corrosive fumes such as HF are generated. This puts a high demand on the corrosion resistance of the materials applied for the furnace.

Ideally, a material should be available that can be used for CAB but does not have the requirements and defects of the known brazing flux application. Such a material can be supplied to a manufacturer of brazed assemblies and is ready to use directly after forming of the assembly parts. No additional brazing fluxing operations have to be carried out. Presently, only one process for fluxless brazing is used on an industrial scale. The material for this process can be, for example, standard brazing sheet made from an AA3xxx-series core alloy clad on one or both sides with a cladding of an AA4xxx-series alloy. Before the brazing sheet can be used the surface has to be modified in such a way that the naturally occurring aluminium oxide layer does not interfere during the brazing cycle. The method of achieving good brazing is to deposit a specific amount of nickel on the surface of the clad alloy. If properly applied, the nickel reacts, presumably exothermically, with the underlying aluminium. When electroplating is used the adherence of the nickel should be sufficient to withstand typical shaping operations being used in for example heat exchanger manufacture.

Processes for nickel-plating in an alkaline solution of aluminum brazing sheet are known from each of US-A-3,970,237, US-A-4,028,200, and US-A-4,164,454. According to these documents, nickel or cobalt, or combinations thereof, are most preferably deposited in combination with lead. The lead addition is used to improve the wetteability of the aluminium clad alloy during the brazing cycle. An important characteristic of these plating processes is that the nickel is preferentially deposited on the silicon particles of the aluminium clad alloy. To obtain sufficient nickel for brazing, the surface of the aluminium clad alloy should contain a relatively large number of silicon particles to act as nuclei for the nickel deposition. It is believed that to obtain sufficient nucleation sites a part of the aluminium in which the silicon particles are embedded should be removed before pickling by chemical and/or mechanical pre-treatment. This is believed a necessary condition to obtain sufficient silicon coverage to serve as nuclei for the plating action of the brazing or clad alloy. On a microscopic scale the surface of the Si-containing cladding of the brazing sheet is covered with nickel-lead globules. However, the use of lead for the production of a suitable nickel and/or cobalt layer on brazing sheet has several disadvantages. The use of lead for manufacturing products, such as automotive products, is undesirable and it is envisaged that in the very near future there might possibly even be a ban on lead comprising products or products manufactured via one or more intermediate processing steps comprising lead or lead-based components.

The international PCT patent application no. WO-00/71784, of J.N. Mooij *et al.,* discloses a brazing sheet product and a method of its manufacture. In this brazing sheet product there is provided a very thin bonding layer, preferably applied by plating, comprising zinc or tin between the AlSi-alloy clad layer and the nickel layer in order to improve the bonding of the nickel layer. The addition of lead to the nickel layer has been replaced by the addition of bismuth while maintaining the excellent brazeability characteristics of the brazing sheet product.

A drawback of the known brazing sheet products having a layer comprising nickel is the limited corrosion life of brazed products in a SWAAT-test in accordance with ASTM G-85. Post-braze corrosion lifetimes without perforations are typically in the range of 4 days and thereby restricting possible interesting applications of this brazing product. For several applications, of the known nickel-plated brazing sheet in brazed products, such a relatively short corrosion lifetime is not detrimental. However, a good corrosion resistance is considered a valuable property for brazing products used in, amongst others, heat exchangers, such as radiators and condensers. These heat exchangers are exposed to a severe external corrosive attack by, e.g., de-icing road salt.

It is an object of the present invention to provide a Ni-plated brazing sheet product for use in a brazing operation, ideally a fluxless CAB brazing operation, and wherein the brazing sheet product has an improved post-braze corrosion resistance when measured in a SWAAT-test in accordance with ASTM-G-85.
It is a further object of the present invention to provide a method of manufacturing Ni-plated brazing product for use in a brazing operation, ideally a fluxless CAB brazing operation, and wherein the resultant brazing product has an improved post-braze corrosion resistance when measured in a SWAAT-test in accordance with ASTM G-85. It is another object of the present invention to provide a method of manufacturing a brazing sheet product comprising a core sheet made of an aluminium alloy coupled on at least one surface of the core sheet to an aluminium clad layer, the aluminium clad layer being made of an aluminium alloy comprising silicon in an amount in the range of 4 to 14% by weight, and a further layer comprising nickel on the outer surface of the aluminium clad layer such that taken together the aluminium clad layer and all layers exterior thereto form a filler metal for a brazing operation, and wherein the resultant brazing sheet product has an improved post-braze corrosion resistance when measured in a SWAAT-test in accordance with ASTM G-85.

In accordance with the invention in one aspect there is provided a brazing sheet product having a core sheet, on at least one side of the core sheet a clad layer of an aluminium alloy comprising silicon in an amount in the range of 4 to 14% by weight, and further comprising on at least one outersurface of the clad layer a plated layer of nickel-tin alloy, such that the clad layer and all layers exterior thereto form a metal filler for a brazing operation and having a composition with the proviso that the mol-ratio of Ni:Sn is in the range of 10:(0.5 to 9), and preferably 10:(0.5 to 6).

With the brazing sheet product according to the invention there is achieved a post-braze corrosion lifetime without perforations according to ASTM G-85 of 6 days or more. The brazing sheet product can be fluxless brazed under controlled atmosphere conditions in the absence of a brazing flux material while achieving improved post-braze corrosion performance enhancing the possibilities of application of the Ni-plated brazing products.

The invention is based in part on the insight that it is believed that the cathodic reaction governs the overall corrosion rate of Ni-plated brazing products when tested in the SWAAT-test in accordance with ASTM G-85. It is speculated that the cathodic reaction in this system appears to be the Hydrogen Evolution Reaction ("HER"). When Ni-plated brazing products such as brazing sheets are being subjected to a brazing operation, typically a fluxless CAB operation, small Ni-aluminide particles are being formed which are believed to catalyse the HER. By the addition of tin in a sufficient amount to the metal filler and having a lower exchange current density for the HER as compared to nickel-aluminides the catalyst effect is reduced and the post-braze corrosion performance of the brazed product is being improved remarkably.
It is believed that an upper layer of pure tin metal is sensitive to progressive oxidation in pre-braze conditions under humid conditions, e.g., during transport of a plated coil to a customer. The surface oxides formed adversely influence the brazing process. By providing the tin required to improve the post-braze corrosion performance in the form of a plated nickel-tin alloy layer, no free tin is available anymore and thereby the occurrence of the detrimental progressive oxidation of the tin is avoided. It has been found that the plated Ni-Sn alloy layer forms a thin stable surface oxide film in air.

The invention in another aspect is characterized by a method of manufacturing an aluminium or aluminium alloy workpiece according to claim 11.

According to this aspect of the invention there is provided a method of forming an Ni-plated aluminium brazing workpiece, ideally a brazing sheet product, with a plated nickel-tin alloy layer on the workpiece, the plated nickel-tin alloy layer improving the post-braze corrosion performance of the resultant product.

The outersurface of the workpiece is an AlSi-alloy clad layer and all layers exterior thereto form a metal filler for a brazing operation and have a composition with the proviso that the mol-ratio of Ni:Sn is in the range of 10:(0.5 to 9), and preferably in the range of 10:(0.5 to 6). When the mol-ratio is too low no significant improvement in the post-braze corrosion life may be found. It has been found that if the mol-ratio becomes more than 10:6, then the brazeability becomes less efficient, while at a mol-ratio of more than 10:9 the brazeability becomes very poor.

In the plating bath used in the method according to the invention the nickel and tin ion concentration is such that the tin ion concentration should be in the range of 5 to 70 wt.%, and preferably in the range of 5 to 30 wt.%, in order to the arrive at the desired Ni:Sn mol-ratio in the plated layer. The balance in metal ions in made by nickel. Both the tin and nickel ions are preferably added to the plating bath in the form of salts, in particular as chloride salt (NiCl₂.6H₂O and SnCl₂.2H₂O).

The plating bath preferably comprises sodium pyrophosphate (Na₄P₂O₇) or potassium pyrophosphate (K₄P₂O₇) as a complexing agent for the metal ions in the bath. The pyrophosphate should be added in the range of 65 to 650 g/l, and preferably 100 to 350 g/l. In addition to the pyrophosphate there should preferably be present a further complexing agent, preferably a α-amino acid to obtain a bright, fine-grained deposit. A very practical α-amino acid is glycine (amino acetic acid: NH₂CH₂COOH). Glycine shifts the polarization curve of nickel towards a more noble potential, while leaving the polarization curve of the tin practically unaffected. This further complexing agent should be present in a range of 4 to 50 g/l, preferably 5 to 40 g/l.

The overall balance of the Ni-Sn plating bath used in the method according to the invention, which comprises the components detailed above, is water. When practicing the plating method of the present invention, it is preferred to maintain the pH value of the plating bath at a level ranging from 6.5 to 9.0 throughout the plating operation, and preferably in the range of 7.5 to 8.5. If the pH value is less than 6.5 or if it exceeds 9, the stability of the metal ions present in the plating bath is significantly reduced.

The plating bath according to the present invention is substantially free of lead ions, and preferably the bath does not comprise any lead ions at all.

The aqueous plating bath demonstrated to be operational in a reasonable pH range, and at a wide temperature range of 30 to 70°C, and preferably 40 to 60°C, and further can be used in industrial scale coil plating lines using current densities up to about 4 A/dm², and preferably using current densities in the range of 0.4 to 3.0 A/dm². At too high current densities coarse deposits are obtained. Further advantages of this plating bath are that it does not generate any ammonia fumes, it does not use any components based on fluorides, it can be composed using standard and readily available chemicals, and the nickel ion and tin ion concentrations can easily be replenished to the plating bath from soluble anodes of these metals.

In a preferred embodiment all the nickel present for the metal filler used in the brazing operation is deposited simultaneously with the tin into a nickel-tin alloy. However, it is possible to firstly electroplate a thin nickel layer or nickel-bismuth layer, or vice versa, for example by using the aqueous Ni-Bi plating bath as set out in the international application WO-01/88226, and on the outersurface of this first nickel or nickel-alloy layer there is plated the nickel-tin alloy layer. In the plated nickel-tin alloy layer the tin content should be increased to arrive at the desired Ni:Sn mol-ratio in the metal filler. However, this approach requires an additional plating step, and it is preferred to use one electroplating step only.

In an embodiment, taken together the aluminium base substrate and all layers exterior thereto form a metal filler for a brazing operation and have a composition comprising at least, by weight percent:
Si in the range of 5 to 14 %,
Ni in the range of 0.03 to 8%,
Sn in the range of 0.01 to 7%,
Bi in the range of at most 0.3%,
Sb in the range of at most 0.3%,
Zn in the range of at most 0.3%,
Mg in the range of at most 5%,
balance aluminium and inevitable impurities,
and with the proviso that the mol-ratio of Ni:Sn is in the range of 10:(0.5 to 9), and preferably in the range of 10:(0.5 to 6). The reasons for the limitations of the Ni:Sn mol-ratio have been set out above.

A typical impurity element in the filler metal is iron, in particular originating from the AlSi-alloy substrate or AlSi-alloy clad layer, and which may be tolerated up to about 0.8 %. Other alloying elements may be present, and will typically originate from the aluminium base substrate or alternatively the aluminium clad layer. Typically each impurity element is present in a range of not more than 0.05 %, and the total of the impurity elements does not exceed 0.3%.

Preferably the applied layer comprising the nickel-tin alloy has a thickness of at most 2.0µm, preferably at most 1.0µm, and more preferably in the range of 0.1 to 0.8µm. A coating thickness of more than 2.0µm requires a prolonged treatment time for plating, and may result in wrinkling of the molten filler metal during a subsequent brazing operation. A preferred minimum thickness for this nickel-tin alloy layer is about 0.25µm. Also, other techniques such as dipping, thermal spraying, CVD, PVD or other techniques for depositing of metal alloys from a gas or vapour phase may be used. Preferably the nickel-tin alloy layer is essentially lead-free.

In an embodiment the Al or Al alloy workpiece is an aluminium alloy sheet or aluminium alloy wire or aluminium alloy rod. Although various aluminium alloys may be applied, e.g., those within the Aluminium Association (AA)3xxx- and AA6xxx-series aluminium alloys, particular suitable aluminium alloys are those within the AA4xxx-series alloys, typically having Si as the most important alloying element in the range of 4 to 14% by weight, more preferably 7 to 14% by weight. Other alloying elements may be present to improve specific properties, the balance is made by iron up to 0.8%, and impurities each up to 0.05 wt.%, total up to 0.25 wt.%, and aluminium. An AA4xxx-series aluminium alloy sheet can be plated with Ni-Sn alloy in accordance with the method of the invention, and may be employed in subsequent brazing operations, in particular in an inert atmosphere brazing (CAB) operation in the absence of a brazing-flux material. Also, aluminium alloy wire or rods made of an AA4xxx-series alloy may be plated with a Ni-Sn alloy layer, and subsequently employed in brazing operations in particular in an inert atmosphere brazing (CAB) operation in the absence of a brazing-flux material, and may also be employed as weld filler wire or weld filler rod in a welding operation.

In a preferred embodiment the aluminium alloy workpiece is a brazing sheet product comprising a core sheet coupled on at least one surface of the core sheet to an aluminium clad layer, the aluminium clad layer being made of an aluminium AA4xxx-series alloy comprising silicon in the range of 4 to 14% by weight, preferably in the range of 7 to 14%.

In an embodiment of the aluminium brazing sheet product, the core sheet is made of an aluminium alloy, in particular those within the AA3xxx, AA5xxx, or AA6xxx-series aluminium alloys.

In a further embodiment the AlSi-alloy clad layer has a thickness ranging from about 2 to 20% of the total thickness of the total brazing product thickness. Typical AlSi-alloy clad layer thickness is in the range of 40 to 80 micron. The aluminium core sheet has a thickness typically in a range of at most 5 mm, more preferably in the range of 0.1 to 2 mm.

In an embodiment of the brazing sheet product it is further characterized by an optional applied thin layer comprising zinc as an intermediate bonding layer between the outersurface of the AlSi-alloy clad layer and the nickel-tin alloy plated layer. With the zinc comprising intermediate bonding layer a very effective bond between the AlSi-alloy clad layer and the nickel-tin layer is formed, the bond remaining effective during subsequent deformation of the brazing product, for example in a bending operation. Preferably, the intermediate bonding layer has a thickness of at most 0.5µm, more preferably at most 0.3 µm (300nm), and most preferably in the range of 0.01 to 0.15µm (10-150nm). In the best results obtained a thickness of about 30nm has been used. It has been found that the thin bonding layer of zinc has no detrimental effect on the post-braze corrosion performance of the brazing product according to the invention.

The adhesion of the Ni-Sn alloy layer to the aluminium workpiece, such as the cladding of a brazing sheet product, is fairly good, but may be further improved by a proper pre-treatment of the outersurface of the aluminium workpiece on which the Ni-Sn alloy layer is being deposited, such as the AlSi-alloy clad layer of a brazing sheet product. The pre-treatment comprises a preliminary cleaning step during which the surface is made free from grease, oil, or buffing compounds. This can be accomplished in various ways, and can be done, amongst others, by vapour degreasing, solvent washing, or solvent emulsion cleaning. Also, a mild etching may be employed. Following the preliminary cleaning, the surface should preferably be conditioned. Several methods can be applied successfully, such as, those set out in the international application WO-01/88226 of J.N. Mooij *et al.,* incorporated herein by reference, on page 9, line 29 to page 10, line 21.

Furthermore, according to claim 20, the present invention is embodied in the use of this NiSn alloy pyrophosphate plating bath as set out above for the electrodeposition of a layer of nickel-tin alloy on the outersurface of an aluminium workpiece, preferably a brazing sheet product, for the manufacturing of Ni-plated products for use in a fluxless CAB brazing operation.

The invention further provides an assembly of components, for example a heat exchanger, typically for automotive applications, or a fuel cell, typically an electrochemical fuel cell, joined by brazing, whereby at least one of the components being the brazing sheet product or the brazing product obtained by the method set out above. The brazing operation is preferably carried out in an inert atmosphere (CAB) in the absence of a brazing flux material or under a vacuum.

In an embodiment there is provided a brazed assembly wherein at least one of the components to be joined by brazing is produced by the method in accordance with the invention described above, and at least one other component is made of steel, aluminised steel, stainless steel, plated or coated stainless steel, bronze, brass, nickel, nickel alloy, titanium, or plated or coated titanium.

### EXAMPLE

On a laboratory scale tests were carried out on aluminium brazing sheets manufactured from an AA3003 core alloy roll clad on both sides with an AA4045 clad alloy, and having a total thickness of 0.5 mm and a clad layer thickness of 50 microns on both sides. The following sequential pre-treatment steps have been used for each sample:
- cleaning by immersion for 180 sec. at 50°C in ChemTec 30014 bath (a commercially available bath), followed by rinsing,
- alkaline etching for 20 sec. at 50°C in ChemTec 30203 bath (a commercially available bath), followed by rinsing,
- desmutting for 60 sec. at room temperature in an acidic oxidizing solution, typically 50% nitric acid, followed by rinsing,
- zincate immersion using ChemTec 19023 bath (a commercially available zincate bath) for 60 sec. at room temperature resulting in a thin zinc layer having a thickness of about 30 nm, followed by rinsing.

Following the above pre-treatment on both sides a Ni-Sn alloy layer had been electroplated of variable tin-concentration using a pyrophosphate bath. The plating operating conditions were a pH of 8, a current density of 1A/dm² and a plating bath temperature of 50°C. The pyrophosphate plating bath composition was as follows, with the balance of water:

| | |
|---|---|
| 30 g/l | NiCl₂.6H₂O (0.125 M) |
| four different levels of SnCl₂.2H₂O | |
| 165 g/l | K₄P₂O₇ (0.5 M) |
| 20 g/l | glycine |

The Sn-concentration was varied to four different levels in order to vary the resultant tin-concentration of the applied Ni-Sn alloy layer (see also Table 1). The measured tin and nickel concentration in the plating baths have been measured using ICP (Induced Coupled Plasma). Also the nickel and tin concentrations in the resultant electroplated layer have been measured using ICP and given in Table 1.

For the assessment of the post-braze corrosion resistance, the samples have been subjected to a simulated brazing cycle. The samples were heated under flowing nitrogen, with heating from room temperature to 580°C, dwell time at 580°C for 2 minutes, cooling from 580°C to room temperature. All samples had an excellent brazeability. Following the brazing cycle four samples of each type of plated brazing sheet have been tested in a SWAAT until the first perforations expressed in days of testing appear according to ASTM G-85, and the average results are given in Table 2. The dimensions of the samples for the SWAAT-test were 100mmx50mm.

As a reference it is mentioned that typically aluminium brazing sheets manufactured from an AA3003 core alloy clad on both sides with an AA4045 clad alloy, and having a total thickness of 0.5 mm and a clad layer thickness of 50 microns each and devoid of any further metal layers have a SWAAT-test performance of more than 16 days without perforations after being subjected to the same simulated brazing cycle as the examples according to the invention.

As a further reference material also brazing sheet product (same core and clad layer composition and thickness) with a thin zinc bonding layer and only a NiBi-alloy electroplated layer manufactured according to the example of the international PCT application no. WO-01/88226, of J.N. Mooij *et al.,* and incorporated herein by reference, has been tested for its corrosion performance after being subjected to the same simulated brazing cycle as the examples according to the invention.

For this example all products tested had the same AA3003-series core alloy.

This example shows how an electroplated nickel-tin alloy layer, and which is lead-free, can be applied on an aluminium workpiece, *viz*. an aluminium brazing sheet product and achieving an excellent brazeability. Also, from the results of Table 2 it can be seen that by increasing the amount of tin with respect to the amount of nickel an improved post-braze SWAAT-test performance is obtained compared to the same brazing sheet product plated only with a known nickel layer comprising a small amount of bismuth to improve the flowability during the brazing operation. Tin may also reduce the surface tension of the molten metal filler during the brazing cycle and thereby improves the flowability of the molten filler metal. The amount of tin to improve the post-braze corrosion performance is by far sufficient to overcome the need for the addition of bismuth or antimony or magnesium added for the same purpose of reducing the surface tension. The combined addition of Sn with Bi and/or Sb and/or Mg remains still possible.

| **Table 1.** The variable tin concentration in the plating bath and the composition of the resultant plated nickel-tin alloy layer. | | | | | | |
|---|---|---|---|---|---|---|
| **Example** | **Plating bath** | | | **Resultant Ni-Sn alloy layer** | | |
| | **Added SnCl₂.2H₂O** | **ICP Sn-ion** | **ICP Ni-ion** | **Ni** | **Sn** | **Mol-ratio Ni:Sn** |
| | | | | **(g/m²)** | **(g/m²)** | |
| | **(g/l)** | **(g/l)** | **(g/l)** | | | |
| **1** | 1.1 | 0.58 | 7.57 | 3.85 | 0.77 | 10 : 1 |
| **2** | 2.2 | 1.14 | 7.50 | 3.30 | 1.32 | 10 : 2 |
| **3** | 3.3 | 1.67 | 7.37 | 3.39 | 2.11 | 10 : 3.1 |
| **4** | 4.4 | 2.17 | 7.21 | 3.48 | 2.67 | 10 : 3.8 |

| **Table 2.** Post-braze corrosion performance of the example according to the invention and the comparative examples. | | |
|---|---|---|
| **Example** | **Mol-ratio Ni:Sn** | **Average SWAAT-test Result** |
| | | **(days)** |
| **1** | 10 : 1 | 6 |
| **2** | 10:2 | 7 |
| **3** | 10:3.1 | 8 |
| **4** | 10: 3.8 | 8 |
| **NiBi** | - | 4 |
| **Standard AA3003 with AA4045** | - | 16 |

Having now fully described the invention, it will be apparent to one of ordinary skill in the art that many changes and modifications can be made without departing from the scope of the invention as claimed.

## Claims

1. A brazing sheet product comprising a core sheet, on at least one side of said core sheet a clad layer of an aluminium alloy comprising silicon in an amount in the range of 4 to 14% by weight, and further comprising on at least one outer surface of said clad layer a layer of nickel-tin alloy, such that the clad layer and all layers exterior thereto form a metal filler for a brazing operation and having a composition with the proviso that the mol-ratio of Ni:Sn is in the range of 10:(0.5 to 9).

2. A brazing sheet product according to claim 1, wherein the mol-ratio of Ni:Sn is in the range of 10:(0,5 to 6).

3. A brazing sheet product according to claim 1 or 2, wherein the layer of nickel-tin alloy is a plated layer.

4. A brazing sheet product according to claim 1 or 2, wherein the layer of nickel-tin alloy is applied via a technique selected from the group consisting of dipping, thermal spraying, chemical vapour deposition, physical vapour deposition.

5. A brazing sheet product according to any one of claims 1 to 4, wherein the layer of nickel-tin alloy is essentially lead-free.

6. A brazing sheet product according to any one of claims 1 to 5, wherein the layer of nickel-tin alloy has a thickness of at most 2.0µm, and preferably the layer of nickel-tin alloy has a thickness of at most 1.0µm, and more preferably the layer of nickel-tin alloy has a thickness in a range of 0.1 to 0.8µm.

7. A brazing sheet product according to any one of claims I to 6, wherein there is provided a layer comprising zinc as a bonding layer between the outer surface of the AlSi-alloy clad layer and the nickel-tin alloy layer.

8. A brazing sheet product according to claim 7, wherein the bonding layer has a thickness of at most 0.5µm, and preferably the bonding layer has a thickness of at most 0.3µm.

9. A brazing sheet product according to any one of claims 1 to 8, wherein the core sheet is made of an aluminium alloy, and preferably made of an aluminium alloy selected from the group consisting of AA3xxx, AA5xxx and AA6xxx-series aluminium alloys.

10. A brazing sheet product according to any one of claims 1 to 9, wherein the brazing sheet product has a post-braze corrosion life of 6 days or more in a SWAAT-test without perforations in accordance with ASTM G-85.

11. A method of manufacturing an aluminium or aluminium alloy product, which method comprises the steps of:
(a) providing an aluminium or aluminium alloy workpiece, the outer surface of the workpiece being an Al-Si alloy clad layer,
(b) pre-treating the outer surface of the aluminium or aluminium alloy workpiece, and
(c) plating a metal layer comprising nickel on at least one outer surface of the clad layer, wherein during step (c) the metal layer comprising nickel is deposited by plating a nickel-tin alloy using an aqueous plating bath comprising a nickel-ion concentration in a range of 2 to 50 g/l and a tin-ion concentration in the range of 0.2 to 20 g/l such that the clad layer and all layers exterior thereto form a metal filler for a brazing operation, with the nickel-tin alloy having a composition with the proviso that the mol-ratio composition of Ni:Sn is in the range of 10:(0.5 to 9).

12. A method according to claim 11, wherein during step (c) the electroplated layer has a composition such that the mol-ratio of Ni:Sn is in the range of 10:(0.5 to 6).

13. A method according to claim 11 or 12, wherein taken together said aluminium workpiece and all layers exterior thereto form a metal filler for a brazing operation and having a composition comprising at least, by weight percent:
Si in the range of 5 to 12 %,
Ni in the range of 0.03 to 8%,
Bi in the range of at most 0.3%,
Sb in the range of at most 0.3%,
Sn in the range of 0.01 to 7%,
Zn in the range of at most 0.3%,
Mg in the range of at most 5%,
balance aluminium and inevitable impurities,
with the proviso that the mol-ratio of Ni:Sn is in the range of 10:(0.5 to 9).

14. A method according to any one of claims 11 to 13, wherein the aqueous plating bath has a pH in the range of 6.5 to 9.0, and preferably the aqueous plating bath has a pH in the range of 7.5 to 8.5.

15. A method according to any one of claims 11 to 14, wherein the aqueous plating bath further comprises a pyrophosphate as a complexing agent in a range of 0.2 to 2 M/l.

16. A method according to any one of claims 11 to 15, wherein the aqueous plating bath further comprises a further complexing agent in the form of an α-amino acid, and preferably an α-amino acid in the form of amino acetic acid.

17. A method according to any one of claims 11 to 16, wherein the layer of nickel-tin alloy has a thickness of at most 2.0µm, and preferably the layer of nickel-tin alloy has a thickness of at most 1.0µm, and more preferably the layer of nickel-tin alloy has a thickness in a range of 0.1 to 0.8µm.

18. A method according to any one of claims 11 to 17, wherein the workpiece is a brazing sheet product comprising a core sheet coupled on at least one surface of said core sheet to an aluminium clad layer, the aluminium clad layer being made of an aluminium alloy comprising silicon in an amount in the range of 4 to 14% by weight, and wherein during step (b) at least the outer surface of the aluminium clad alloy is being pre-treated.

19. A method according to claim 18, wherein the core sheet of the brazing sheet is made of an aluminium alloy, and preferably made of an aluminium alloy selected from the group consisting of AA3xxx, AA5xxx, and AA6xxx-series aluminium alloys.

20. Use of an aqueous plating bath for manufacturing Ni-plated products for use in fluxless CAB brazing operations comprising:
(a) providing an Al or A1 alloy workpiece within the aqueous bath, the aqueous bath having a pH in the range of 6.5 to 9.0;
(b) pre-treating of the outer surface of the Al or Al alloy workpiece; said outer surface being an Al-Si alloy clad layer,
(c) plating by electrodeposition a nickel-tin alloy on the workpiece using an aqueous plating bath comprising a nickel-ion concentration in a range of 2 to 50 g/l and a tin-ion concentration in the range of 0.2 to 20 g/l such that the clad layer and all layers exterior thereto form a metal filler for a brazing operation, with the nickel-tin alloy having a composition with the proviso that the mol-ratio composition of Ni:Sn is in the range of 10:(0.5 to 9), the plating step further comprising (i) at least one member of the group consisting of sodium pyrophosphate and potassium pyrophosphate thereof in the range of 0.2 to 2 M/l as a complexing agent, (ii) a further complexing agent, and a balance of water.

21. Use according to claim 20, wherein the pyrophosphate is present in a range of 65 to 650 g/l, and preferably in a range of 100 to 350 g/l.

22. Use according to claim 20 or 21, wherein the further complexing agent is in the form of an α-amino acid, and preferably the α-amino acid is amino acetic acid.

23. Use according to any one of claims 20 to 22, wherein the aqueous plating bath is substantially free of lead ions.

24. An assembly of components joined by brazing, and wherein at least one said components being a brazing sheet product according to any one of claims 1, to 10, or the product obtained by the method according to any one of claims 11 to 19.

25. An assembly according to claim 24, wherein the components are joined by means of a brazing operation in an inert atmosphere in the absence of a brazing flux material.

26. An assembly according to claim 24 or 25, wherein at least one other of said components comprises a material selected from the group consisting of steel, aluminised steel, stainless steel, plated or coated steel, plated or coated stainless steel, bronze, brass, nickel, nickel alloy, titanium, and plated or coated titanium.

27. An assembly according to any one of claims 24 to 26, wherein the assembly is a heat exchanger for automotive application.

28. An assembly according to any one of claims 24 to 26, wherein the assembly is a fuel cell, more preferably the assembly is an electrochemical fuel cell.

## Patentansprüche

1. Hartlötblechprodukt, umfassend ein Kernblech, auf wenigstens einer Seite des Kernblechs eine Plattierschicht aus einer Aluminiumlegierung, die Silizium in einer Menge in dem Bereich von 4 bis 14 Gew.-% enthält, und des Weiteren auf wenigstens einer Außenfläche der Plattierschicht eine Schicht aus Nickel-Zinn-Legierung umfassend, so dass die Plattierschicht und alle dieser gegenüber äußeren Schichten einen Metallfüllstoff für einen Hartlötvorgang bilden und eine Zusammensetzung unter der Bedingung, dass das Molverhältnis von Ni:Sn in dem Bereich von 10:(0,5 bis 9) liegt, aufweisen.

2. Hartlötblechprodukt nach Anspruch 1, wobei das Molverhältnis von Ni:Sn in dem Bereich von 10:(0,5 bis 6) liegt.

3. Hartlötblechprodukt nach Anspruch 1 oder 2, wobei die Schicht aus Nickel-Zinn-Legierung eine galvanisierte Schicht ist.

4. Hartlötblechprodukt nach Anspruch 1 oder 2, wobei die Schicht aus Nickel-Zinn-Legierung mittels einer Technik aufgetragen wird, die aus der Gruppe bestehend aus Tauchen, thermischem Spritzen, chemischem Aufdampfen, physikalischem Aufdampfen ausgewählt wird.

5. Hartlötblechprodukt nach einem der Ansprüche 1 bis 4, wobei die Schicht aus Nickel-Zinn-Legierung im Wesentlichen bleifrei ist.

6. Hartlötblechprodukt nach einem der Ansprüche 1 bis 5, wobei die Schicht aus Nickel-Zinn-Legierung eine Dicke von höchstens 2,0 µm aufweist und die Schicht aus Nickel-Zinn-Legierung vorzugsweise eine Dicke von höchstens 1,0 µm aufweist, wobei stärker zu bevorzugen ist, dass die Schicht aus Nickel-Zinn-Legierung eine Dicke in einem Bereich von 0,1 bis 0,8 µm aufweist.

7. Hartlötblechprodukt nach einem der Ansprüche 1 bis 6, wobei eine Schicht bereitgestellt wird, die Zink als Verbindungsschicht zwischen der Außenfläche der Al-Si-Legierungsplattierschicht und der Nickel-Zinn-Legierungsschicht enthält.

8. Hartlötblechprodukt nach Anspruch 7, wobei die Verbindungsschicht eine Dicke von höchstens 0,5 µm aufweist und die Verbindungsschicht vorzugsweise eine Dicke von höchstens 0,3 µm aufweist.

9. Hartlötblechprodukt nach einem der Ansprüche 1 bis 8, wobei das Kernblech aus einer Aluminiumlegierung hergestellt ist und vorzugsweise aus einer Aluminiumlegierung, die aus der Gruppe bestehend aus Aluminiumlegierungen der Serien AA3xxx, AA5xxx und AA6xxx ausgewählt wurde, hergestellt ist.

10. Hartlötblechprodukt nach einem der Ansprüche 1 bis 9, wobei das Hartlötblechprodukt nach dem Hartlöten eine Korrosionslebensdauer von 6 Tagen oder mehr bei einem SWAAT-Test ohne Perforationen gemäß ASTM G-85 aufweist.

11. Verfahren zum Herstellen eines Aluminium- oder Aluminiumlegierungsprodukts, wobei das Verfahren die folgenden Schritte umfasst:
(a) Bereitstellen eines Aluminium- oder Aluminiumlegierungswerkstücks, wobei die Außenfläche des Werkstücks eine Al-Si-Legierungsplattierschicht ist;
(b) Vorbehandeln der Außenfläche des Aluminium- oder A-luminiumlegierungswerkstücks; und
(c) Galvanisieren einer Metallschicht, die Nickel enthält, auf wenigstens eine Außenfläche der Plattierschicht, wobei in Schritt (c) die Metallschicht, die Nickel enthält, durch Galvanisieren einer Nickel-Zinn-Legierung unter Verwendung eines wässerigen Galvanisierbads, das eine Nickelionenkonzentration in einem Bereich von 2 bis 50 g/l und eine Zinnionenkonzentration in dem Bereich von 0,2 bis 20 g/l enthält, so aufgebracht wird, dass die Plattierschicht und alle dieser gegenüber äußeren Schichten einen Metallfüllstoff für einen Hartlötvorgang bilden, wobei die Nickel-Zinn-Legierung eine Zusammensetzung unter der Bedingung, dass die Molverhältniszusammensetzung von Ni:Sn in dem Bereich von 10:(0,5 bis 9) liegt, aufweist.

12. Verfahren nach Anspruch 11, wobei in Schritt (c) die elektroplattierte Schicht eine derartige Zusammensetzung aufweist, dass das Molverhältnis von Ni:Sn in dem Bereich von 10:(0,5 bis 6) liegt.

13. Verfahren nach Anspruch 11 oder 12, wobei das Aluminiumwerkstück und alle diesem gegenüber äußeren Schichten zusammengenommen einen Metallfüllstoff für einen Hartlötvorgang bilden und eine Zusammensetzung aufweisen, die wenigstens das Folgende enthält (in Gew.-%):
Si in dem Bereich von 5 bis 12 %,
Ni in dem Bereich von 0,03 bis 8 %,
Bi in dem Bereich von höchstens 0,3 %,
Sb in dem Bereich von höchstens 0,3 %,
Sn in dem Bereich von 0,01 bis 7 %,
Zn in dem Bereich von höchstens 0,3 %,
Mg in dem Bereich von höchstens 5 %,
Rest Aluminium und unvermeidbare Verunreinigungen, unter der Bedingung, dass das Molverhältnis von Ni:Sn in dem Bereich von 10:(0,5 bis 9) liegt.

14. Verfahren nach einem der Ansprüche 11 bis 13, wobei das wässerige Galvanisierbad einen pH-Wert in dem Bereich von 6,5 bis 9,0 aufweist und das wässerige Galvanisierbad vorzugsweise einen pH-Wert in dem Bereich von 7,5 bis 8,5 aufweist.

15. Verfahren nach einem der Ansprüche 11 bis 14, wobei das wässerige Galvanisierbad des Weiteren ein Pyrophosphat als Komplexbildner in einem Bereich von 0,2 bis 2 M/l enthält.

16. Verfahren nach einem der Ansprüche 11 bis 15, wobei das wässerige Galvanisierbad des Weiteren einen weiteren Komplexbildner in der Form einer α-Aminosäure und vorzugsweise eine α-Aminosäure in der Form von Aminoessigsäure enthält.

17. Verfahren nach einem der Ansprüche 11 bis 16, wobei die Schicht aus Nickel-Zinn-Legierung eine Dicke von höchstens 2,0 µm aufweist und die Schicht aus Nickel-Zinn-Legierung vorzugsweise eine Dicke von höchstens 1,0 µm aufweist, wobei stärker zu bevorzugen ist, dass die Schicht aus Nickel-Zinn-Legierung eine Dicke in einem Bereich von 0,1 bis 0,8 µm aufweist.

18. Verfahren nach einem der Ansprüche 11 bis 17, wobei das Werkstück ein Hartlötblechprodukt ist, das ein Kernblech umfasst, das auf wenigstens einer Oberfläche des Kernblechs mit einer Aluminiumplattierschicht verbunden ist, wobei die Aluminiumplattierschicht aus einer Aluminiumlegierung, die Silizium in einer Menge in dem Bereich von 4 bis 14 Gew.-% enthält, hergestellt ist und wobei in Schritt (b) wenigstens die Außenfläche der Aluminiumplattierlegierung vorbehandelt wird.

19. Verfahren nach Anspruch 18, wobei das Kernblech des Hartlötblechs aus einer Aluminiumlegierung hergestellt ist und vorzugsweise aus einer Aluminiumlegierung, die aus der Gruppe bestehend aus Aluminiumlegierungen der Serien AA3xxx, AA5xxx und AA6xxx ausgewählt wurde, hergestellt ist.

20. Verwendung eines wässerigen Galvanisierbades zum Herstellen von Ni-plattierten Produkten zur Verwendung bei flussmittellosen CAB-Hartlötvorgängen, umfassend:
(a) Bereitstellen eines Al- oder Al-Legierungswerkstücks in dem wässerigen Bad, wobei das wässerige Bad einen pH-Wert in dem Bereich von 6,5 bis 9,0 aufweist;
(b) Vorbehandeln der Außenfläche des Al- oder Al-Legierungswerkstücks, wobei die Außenfläche eine Al-Si-Legierungsplattierschicht ist;
(c) Galvanisieren durch galvanisches Aufbringen einer Nickel-Zinn-Legierung auf das Werkstück unter Verwendung eines wässerigen Galvanisierbads, das eine Nickelionenkonzentration in einem Bereich von 2 bis 50 g/l und eine Zinnionenkonzentration in dem Bereich von 0,2 bis 20 g/l umfasst, so dass die Plattierschicht und alle dieser gegenüber äußeren Schichten einen Metallfüllstoff für einen Hartlötvorgang bilden, wobei die Nickel-Zinn-Legierung eine Zusammensetzung unter der Bedingung, dass die Molverhältniszusammensetzung von Ni:Sn in dem Bereich von 10:(0,5 bis 9) liegt, aufweist, wobei der Galvanisierschritt des Weiteren (i) wenigstens ein Element der Gruppe bestehend aus Natriumpyrophosphat und Kaliumpyrophosphat davon in dem Bereich von 0,2 bis 2 M/l als Komplexbildner, (ii) einen weiteren Komplexbildner und einen Rest Wasser enthält.

21. Verwendung nach Anspruch 20, wobei das Pyrophosphat in einem Bereich von 65 bis 650 g/l und vorzugsweise in einem Bereich von 100 bis 350 g/l vorhanden ist.

22. Verwendung nach Anspruch 20 oder 21, wobei der weitere Komplexbildner die Form einer α-Aminosäure aufweist und die α-Aminosäure vorzugsweise Aminoessigsäure ist.

23. Verwendung nach einem der Ansprüche 20 bis 22, wobei das wässerige Galvanisierbad im Wesentlichen frei von Bleiionen ist.

24. Anordnung aus Bauteilen, die durch Hartlöten verbunden sind und wobei wenigstens eines der Bauteile ein Hartlötblechprodukt nach einem der Ansprüche 1 bis 10 ist oder das Produkt durch das Verfahren nach einem der Ansprüche 11 bis 19 erzielt wurde.

25. Anordnung nach Anspruch 24, wobei die Bauteile mittels eines Hartlötvorgangs in einer inerten Atmosphäre ohne ein Hartlötflussmittelmaterial verbunden sind.

26. Anordnung nach Anspruch 24 oder 25, wobei wenigstens ein anderes der Bauteile ein Material enthält, das aus der Gruppe bestehend aus Stahl, aluminiertem Stahl, rostfreiem Stahl, galvanisiertem oder beschichtetem Stahl, galvanisiertem oder beschichtetem rostfreiem Stahl, Bronze, Messing, Nickel, Nickellegierung, Titan und galvanisiertem oder beschichtetem Titan ausgewählt wurde.

27. Anordnung nach einem der Ansprüche 24 bis 26, wobei die Anordnung ein Wärmetauscher zur Anwendung bei Kraftfahrzeugen ist.

28. Anordnung nach einem der Ansprüche 24 bis 26, wobei die Anordnung eine Brennstoffzelle ist, wobei stärker zu bevorzugen ist, dass die Anordnung eine elektrochemische Brennstoffzelle ist.

## Revendications

1. Feuille de brasage comprenant une feuille centrale, sur au moins une face de ladite feuille centrale, une couche de revêtement en un alliage d'aluminium comprenant du silicium en une quantité comprise dans l'intervalle allant de 4 à 14 % en poids, et comprenant en outre, sur au moins une surface externe de ladite couche de revêtement, une couche en alliage nickel-étain, la couche de revêtement et toutes les couches situées à l'extérieur par rapport à celle-ci, formant un métal d'apport pour une opération de brasage et ayant une composition telle que le rapport molaire Ni/Sn est compris entre 10/0,5 et 10/9.

2. Feuille de brasage selon la revendication 1, **caractérisée par le fait que** le rapport molaire Ni/Sn est compris entre 10/0,5 et 10/6.

3. Feuille de brasage selon la revendication 1 ou 2, **caractérisée par le fait que** la couche en alliage Ni/Sn est une couche formée par électrodéposition.

4. Feuille de brasage selon la revendication 1 ou 2, **caractérisée par le fait que** la couche en alliage Ni/Sn est appliquée selon une technique choisie parmi le groupe constitué de l'immersion, de la pulvérisation thermique, du dépôt chimique en phase vapeur et du dépôt physique en phase vapeur.

5. Feuille de brasage selon l'une quelconque des revendications 1 à 4, **caractérisée par le fait que** la couche en alliage Ni/Sn est essentiellement exempte de plomb.

6. Feuille de brasage selon l'une quelconque des revendications 1 à 5, **caractérisée par le fait que** la couche en alliage Ni/Sn a une épaisseur au plus égale à 2,0 µm, de préférence au plus égale à 1,0 µm, et en particulier comprise dans l'intervalle allant de 0,1 à 0,8 µm.

7. Feuille de brasage selon l'une quelconque des revendications 1 à 6, **caractérisée par le fait qu'**elle comprend une couche contenant du zinc, en tant que couche de liaison entre la surface externe de la couche de revêtement en alliage AlSi et la couche en alliage Ni/Sn.

8. Feuille de brasage selon la revendication 7, **caractérisée par le fait que** la couche de liaison a une épaisseur au plus égale à 0,5 µm, de préférence au plus égale à 0,3 µm.

9. Feuille de brasage selon l'une quelconque des revendications 1 à 8, **caractérisée par le fait que** la feuille centrale est en alliage d'aluminium, de préférence en un alliage d'aluminium choisi dans le groupe formé par les alliages d'aluminium des séries AA3xxx, AA5xxx et AA6xxx.

10. Feuille de brasage selon l'une quelconque des revendications 1 à 9, **caractérisée par le fait qu'**elle présente une résistance à la corrosion, après brasage, déterminée par un essai SWAAT sans perforations selon ASTM G-85, supérieure ou égale à 6 jours.

11. Procédé de fabrication d'un produit en aluminium ou alliage d'aluminium, comprenant les étapes suivantes:
(a) préparation d'une pièce de fabrication en aluminium ou alliage d'aluminium, la surface externe de la pièce de fabrication étant une couche de revêtement en alliage AlSi,
(b) prétraitement de la surface externe de la pièce de fabrication en aluminium ou alliage d'aluminium, et
(c) électrodéposition d'une couche métallique comprenant du nickel sur au moins une surface externe de la couche de revêtement, ladite couche métallique comprenant du nickel étant déposée pendant l'étape (c) par électrodéposition d'un alliage Ni/Sn au moyen d'un bain aqueux d'électrodéposition ayant une concentration d'ions Ni comprise dans l'intervalle allant de 2 à 50 g/l et une concentration d'ions Sn comprise dans l'intervalle allant de 0,2 à 20 g/l, de sorte que la couche de revêtement et toutes les couches situées à l'extérieur par rapport à celle-ci forment un métal d'apport pour l'opération de brasage, l'alliage nickel-étain ayant une composition telle que le rapport molaire Ni/Sn est compris entre 10/0,5 et 10/9.

12. Procédé selon la revendication 11, **caractérisé par le fait que**, pendant l'étape (c), la couche déposée par électrodéposition a une composition telle que le rapport molaire Ni/Sn est compris entre 10/0,5 et 10/6.

13. Procédé selon la revendication 11 ou 12, **caractérisé par le fait que**, prises ensemble, ladite pièce de fabrication en aluminium et toutes les couches situées à l'extérieur par rapport à celle-ci forment un métal d'apport pour l'opération de brasage et ont une composition comprenant au moins:
du Si en une quantité de 5 à 12 % en poids,
du Ni en une quantité de 0,03 à 8 % en poids,
du Bi en une quantité au plus égale à 0,3 % en poids,
du Sb en une quantité au plus égale à 0,3 % en poids,
du Sn en une quantité de 0,01 à 7 % en poids,
du Zn en une quantité au plus égale à 0,3 % en poids,
du Mg en une quantité au plus égale à 5 % en poids,
le reste étant de l'aluminium et des impuretés inévitables,
sous réserve que le rapport molaire Ni/Sn soit compris entre 10/0,5 et 10/9.

14. Procédé selon l'une quelconque des revendications 11 à 13, **caractérisé par le fait que** le bain aqueux d'électrodéposition a un pH compris dans l'intervalle allant de 6,5 à 9,0, et de préférence de 7,5 à 8,5.

15. Procédé selon l'une quelconque des revendications 11 à 14, **caractérisé par le fait que** le bain aqueux d'électrodéposition comprend en outre, en tant qu'agent complexant, de 0,2 à 2 moles/litres d'un pyrophosphate.

16. Procédé selon l'une quelconque des revendications 11 à 15, le bain aqueux d'électrodéposition comprenant en outre un deuxième agent complexant choisi parmi les α-amino-acides, et de préférence un α-amino-acide se présentant sous la forme de l'acide amino-acétique.

17. Procédé selon l'une quelconque des revendications 11 à 16, **caractérisé par le fait que** la couche en alliage Ni/Sn a une épaisseur au plus égale à 2,0 µm, de préférence au plus égale à 1,0 µm, et en particulier comprise dans l'intervalle allant de 0,1 à 0,8 µm.

18. Procédé selon l'une quelconque des revendications 11 à 17, **caractérisé par le fait que** la pièce de fabrication est une feuille de brasage comprenant une feuille centrale couplée, sur au moins une de ses surfaces, à une couche de revêtement en aluminium, la couche de revêtement en aluminium étant en un alliage d'aluminium comprenant de 4 à 14 % en poids de silicium, et que, pendant l'étape (b), au moins la surface externe de la couche de revêtement en aluminium est prétraitée.

19. Procédé selon la revendication 18, la feuille centrale de la feuille de brasage étant en alliage d'aluminium, de préférence en un alliage d'aluminium choisi dans le groupe formé par les alliages d'aluminium des séries AA3xxx, AA5xxx et AA6xxx.

20. Utilisation d'un bain aqueux d'électrodéposition pour la fabrication de produits nickelés destinés à être utilisés lors d'opérations de brasage sous atmosphère contrôlée sans décapant de brasage, comprenant:
(a) la préparation d'une pièce de fabrication en aluminium ou alliage d'aluminium à l'intérieur du bain aqueux, le bain aqueux ayant un pH compris dans l'intervalle allant de 6,5 à 9,0,
(b) le prétraitement de la surface externe de la pièce de fabrication en aluminium ou alliage d'aluminium, ladite surface externe étant une couche de revêtement en alliage AlSi,
(c) le placage par électrodéposition d'une couche en alliage Ni/Sn sur la pièce de fabrication au moyen d'un bain aqueux d'électrodéposition ayant une concentration d'ions Ni comprise dans l'intervalle allant de 2 à 50 g/l et une concentration d'ions Sn comprise dans l'intervalle allant de 0,2 à 20 g/l, de sorte que la couche de revêtement et toutes les couches situées à l'extérieur par rapport à celle-ci forment un métal d'apport pour l'opération de brasage, l'alliage nickel-étain ayant une composition telle que le rapport molaire Ni/Sn est compris entre 10/0,5 et 10/9, l'étape de placage comprenant en outre (i) au moins un élément du groupe formé par le pyrophosphate de sodium et le pyrophosphate de potassium dans l'intervalle allant de 0,2 à 2 moles/litres à titre d'agent complexant, (ii) un deuxième agent complexant, et le reste étant de l'eau.

21. Utilisation selon la revendication 20, **caractérisée par le fait que** le pyrophosphate est présent en une concentration comprise dans l'intervalle allant de 65 à 650 g/l, et de préférence de 100 à 350 g/l.

22. Utilisation selon la revendication 20 ou 21, **caractérisée par le fait que** le deuxième agent complexant est choisi parmi les α-amino-acides, et de préférence l'α-amino-acide est de l'acide amino-acétique.

23. Utilisation selon l'une quelconque des revendications 20 à 22, **caractérisée par le fait que** le bain aqueux d'électrodéposition est essentiellement exempt d'ions de plomb.

24. Assemblage de composants liés par brasage, **caractérisé par le fait qu'**au moins un desdits composants est une feuille de brasage selon l'une quelconque des revendications 1 à 10, ou le produit obtenu par le procédé selon l'une quelconque des revendications 11 à 19.

25. Assemblage selon la revendication 24, **caractérisé par le fait que** les composants sont liés par une opération de brasage sous une atmosphère inerte en l'absence d'un décapant de brasage.

26. Assemblage selon la revendication 24 ou 25, **caractérisé par le fait qu'**au moins un autre desdits composants comprend un matériau choisi parmi le groupe formé par l'acier, l'acier aluminisé, l'acier inoxydable, l'acier traité par électrodéposition ou l'acier revêtu, l'acier inoxydable traité par électrodéposition ou l'acier inoxydable revêtu, le bronze, le laiton, le nickel, les alliages de nickel, le titane et le titane traité par électrodéposition ou le titane revêtu.

27. Assemblage selon l'une quelconque des revendications 24 à 26, **caractérisé par le fait que** l'assemblage est un échangeur de chaleur pour des applications automobiles.

28. Assemblage selon l'une quelconque des revendications 24 à 26, **caractérisé par le fait que** l'assemblage est une pile à combustible, en particulier une pile à combustible électrochimique.
